# EUROPÄISCHE PATENTANMELDUNG

(11) **EP 1 496 233 A2**
(43) Veröffentlichungstag der Anmeldung: **12.01.2005**
(21) Anmeldenummer: 04013451.2
(22) Anmeldetag: 08.06.2004
(51) Int. Cl.: F02D 41/40

(54) **Verfahren und Vorrichtung zur Steuerung einer Brennkraftmaschine**

(30) Priorität: 08.07.2003 DE 10330705
(71) Anmelder: ROBERT BOSCH GMBH, 70442 Stuttgart (DE)
(72) Erfinder: Pauer, Thomas, 71691 Freiberg (DE); Gann, Thomas, 71034 Boeblingen (DE)

(57) **Zusammenfassung**

Es werden eine Vorrichtung und ein Verfahren zur Steuerung einer Brennkraftmaschine beschrieben, bei dem ausgehend von einer Kraftstoffmenge eine Ansteuerdauer für ein mengenbestimmtes Stellglied vorgebbar ist. Die Ansteuerdauer wird abhängig von einer Größe, die den Druck in einem Steuerraum charakterisiert, korrigiert.

## Beschreibung

### Stand der Technik

Die Erfindung betrifft ein Verfahren und eine Vorrichtung zur Steuerung einer Brennkraftmaschine.

Ein Verfahren und eine Vorrichtung zur Steuerung einer Brennkraftmaschine ist beispielsweise aus der DE 197 26 756 bekannt. Bei diesem Verfahren wird ausgehend von dem Verlauf des Raildrucks während der Einspritzung die eingespritzte Kraftstoffmenge berechnet.

Üblicherweise wird ausgehend von einer gewünschten Kraftstoffmenge, die in die Brennkraftmaschine eingespritzt werden soll, eine Ansteuerdauer für ein mengenbestimmendes Stellglied vorgegeben. Als Stellglieder werden beispielsweise bei sogenannten Common-Rail-Systemen Injektoren eingesetzt. Ferner können Pumpen-Düse-Einheit verwendet werden. Bei solchen Stellgliedern bestimmt üblicherweise die Ansteuerdauer eines Stellelements, das insbesondere als Magnetventils und/oder als Piezoaktors ausgebildet ist, die Kraftstoffzumessung. Dabei ist üblicherweise vorgesehen, dass mittels eines Aktors, der insbesondere als Magnetventil und/oder Piezoaktor ausgebildet ist, der Zulauf und/oder der Abfluss von Flüssigkeit in einen Steuerraum gesteuert wird.

Die in den Brennraum des Motors abgegebene Menge wird dabei lediglich gesteuert: Eine Regelung ist nur über indirekte Größen, wie beispielsweise die Drehzahl möglich. Messen unterschiedliche Injektoren unterschiedliche Brennräume bei gleichem Ansteuersignal unterschiedliche Kraftstoffmengen zu, so kann dies nur mit erheblichem Aufwand ausgeglichen werden. Dies kann beispielsweise dadurch erfolgen, dass ein Injektormengenabgleich vor dem Einbau der Injektoren erfolgt. Veränderungen über die Lebensdauer können nicht ohne Weiteres kompensiert werden. Diese Einflüsse können zu Leistungs- Geräusch- und/oder Emissionsveränderungen über die Lebenszeit der Brennkraftmaschine führen.

### Vorteile der Erfindung

Dadurch, dass der Druck in dem Steuerraum des Injektors, einer Pumpe-Düse-Einheit oder anderer Stellglieder für die Kraftstoffzumessung bei der Bildung der Ansteuerdauer berücksichtigt wird, ist eine wesentlich genaue Kraftstoffzumessung möglich.

Bei einer besonders vorteilhaften Ausgestaltung wird ein geschlossener Regelkreis für die Einspritzmenge realisiert. Des Weiteren ist durch die Auswertung der Druckwelle, im Steuerraumdrucksignal eine injektorspezifische adaptive Druckwellenkompensation möglich. Bei dieser Druckwellenkompensation ist ein geschlossener Regelkreis möglich.

Durch die erfindungsgemäßen Maßnahmen können bessere Emissionsergebnisse erzielt werden. Systemtoleranzen können positiv beeinflusst werden. Des Weiteren können kleinere Voreinspritzmengen realisiert werden. Ferner reduziert sich der Applikationsaufwand dadurch, dass eine direkte Auswertung der durch die jeweils vorgelagerte Einspritzung ausgelösten Druckwelle. Sämtliche Einflussfaktoren werden durch die Regelung kontinuierlich berücksichtigt. Damit lassen sich die Mengeneinflüsse in Folge Mehrfacheinspritzung korrigieren.

Durch eine werkseitige Kalibrierung der Druckmessung in dem Injektor kann ein Raildrucksensor im Rail eingespart werden und durch die jeweiligen Drucksignale der Injektoren ersetzt werden.

### Zeichnung

Die Erfindung wird nachstehend anhand der in der Zeichnung dargestellten Ausführungsformen erläutert. Es zeigen
Figur 1 ein Blockdiagramm der erfindungsgemäßen Vorgehensweise und
Figur 2 verschiedene über der Zeit aufgetragene Signale.

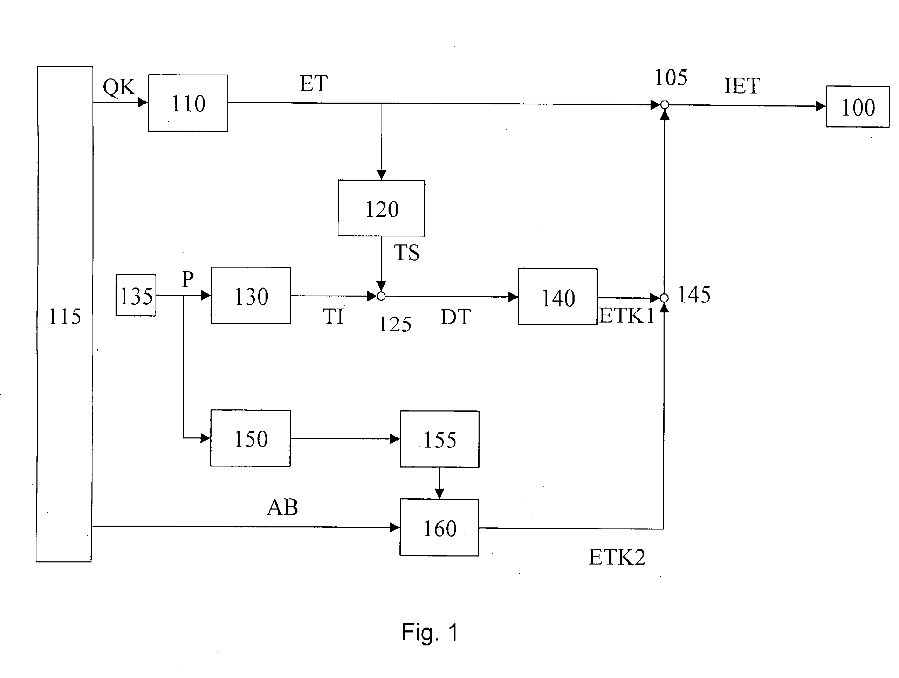

In Figur 1 sind die wesentlichen Elemente der erfindungsgemäßen Vorrichtung anhand eines Blockdiagrammes dargestellt. Eine Endstufe ist mit 100 bezeichnet. Diese Endstufe steuert den Stromfluss bzw. die Spannung, mit der das nicht dargestellte Stellelement angesteuert wird. Die Endstufe wird mit einer Größe IET beaufschlagt, die der Ansteuerdauer des Stellelements entspricht. Beinhaltet das Stellglied ein Magnetventil, so entspricht diese Zeit dem Abstand zwischen dem Beginn der Bestromung und dem Ende der Bestromung, d. h. dem Betätigen eines Schaltmittels, das den Stromfluss freigibt und der Rücknahme der Betätigung des Schaltmittels, die den Stromfluss unterbricht. Alternativ kann auch vorgesehen sein, dass die Zeitdauer IET der Zeitspanne entspricht, während der das Stellglied und/oder der Aktor den Kraftstofffluss freigibt.

Beinhaltet als Stellglied einen Piezoaktor, so gibt die Zeit IET beispielsweise den Abstand zwischen dem Beginn des Ladevorgangs und dem Ende des Entladevorganges an.

Der Stromfluss bzw. die Spannung, die am Aktor anliegt, wird dabei durch die Endstufe 100 gesteuert.

Jeweils ein Stellglied 100 steuert den Kraftstofffluss in einen Zylinder der Brennkraftmaschine. Vorzugsweise ist pro Zylinder der Brennkraftmaschine wenigstens ein Stellglied vorgesehen. Entsprechend ist daher auch eine entsprechende Anzahl von erfindungsgemäßen Vorrichtungen vorgesehen. Das Stellglied beinhaltet einen Aktor, der vorzugsweise als Piezoaktor oder als Magnetventil ausgestaltet ist. Mittels dieses Aktors wird der Zufluss und/oder der Abfluss von Druckmedium in einen Steuerraum und/oder aus einem Steuerraum heraus gesteuert. Abhängig vom Druck in dem Steuerraum öffnet und/oder schließt das Stellglied und gibt den Kraftstofffluss in den Brennraum der Brennkraftmaschine frei. Ein solches Stellglied ist beispielsweise in der DE 101 22 241 bzw. in der EP 661 442 A1 beschrieben. Erfindungsgemäß wurde nun erkannt, dass der Druck im Steuerraum ein direktes Maß für die eingespritzte Kraftstoffmenge darstellt.

Das Signal IET wird von einem Verknüpfungspunkt 105 bereitgestellt. An dessen ersten Eingang liegt das Ausgangssignal ET einer Ansteuerdauerberechnung 110. Diese Ansteuerdauerberechnung 110 wird wiederum von einer Mengensteuerung 115 mit einem Signal QK, das die einzuspritzende Kraftstoffmenge charakterisiert, beaufschlagt. Das Ausgangssignal ET der Ansteuerdauerberechnung 110 gelangt ferner zu einer Sollwertvorgabe 120, die ein Signal TS als Sollwert vorgibt. Dieses Signal TS gelangt zu einem Verknüpfungspunkt 125, an dessen zweitem Eingang das Ausgangssignal TI einer Istwertvorgabe 130 anliegt. Die Istwertvorgabe 130 verarbeitet das Ausgangssignal P eines Drucksensors 135. Der Drucksensor 135 ist derart angeordnet, dass er ein Signal bereitstellt, das dem Druck P im Steuerraum des Stellgliedes entspricht. Mit dem Ausgangssignal des Verknüpfungspunktes 125 DT wird eine erste Korrekturvorgabe 140 beaufschlagt. Diese erste Korrekturvorgabe 140 gibt einen ersten Korrekturwert ETK1 vor, der über einen Verknüpfungspunkt 145 zu dem Verknüpfungspunkt 105 gelangt.

Bei einer verbesserten Ausführungsform gelangt das Ausgangssignal P des Drucksensors 135 zu einer Druckwellenberechnung 150, die wiederum eine Mengenwellenberechnung 155 beaufschlagt. Das Signal der Mengenwellenberechnung 155 gelangt zu einer zweiten Korrekturwertvorgabe 160, die zusätzlich ein Signal AB der Mengensteuerung 115 verarbeitet. Das Ausgangssignal ETK2 der zweiten Korrekturwertvorgabe gelangt zu dem zweiten Verknüpfungspunkt 145.

Erfindungsgemäß ermittelt die in Figur 1 dargestellte Vorrichtung den zeitlichen Verlauf des Steuerraumdrucksignals P und wertet diesen aus. Dabei wird ausgehend von dem Signalverlauf die Zeitdauer TI des Druckeinbruches im Steuerraum ermittelt. Erforderlich hierzu ist eine entsprechend hohe Abtastrate, da diese direkt in den Fehler eingeht. Bei einer einfachen Ausführungsform ist die Istwertvorgabe 130 als Kennfeld ausgebildet, dem als Eingangsgröße wenigstens der Steuerraumdruck P zugeführt wird. Zur Verbesserung der Auswertung können zusätzlich weitere Größen ausgewertet werden. Alternativ zu dem Kennfeld kann auch eine Berechnung gemäß einer vorgegebenen Formel vorgesehen sein.

Die ermittelte Zeitdauer des Druckeinbruches, die dem Signal TI entspricht, wird mit einem entsprechenden Sollwert TS im Verknüpfungspunkt 125 verglichen. Dabei wird der Sollwert TS von der Sollwertvorgabe, ausgehend von der gewünschten einzuspritzenden Kraftstoffmenge QK und/oder von der Ansteuerdauer ET berechnet. Diese Sollwertvorgabe 120 ist vorzugsweise ebenfalls als Kennfeld ausgebildet. Als Eingangsgröße wird diesem Kennfeld wenigstens das Signal ET zugeführt. Zusätzlich können noch weitere Größen berücksichtigt werden. Alternativ zu dem Kennfeld kann auch eine Berechnung gemäß einer vorgegebenen Formel vorgesehen sein.

Erfindungsgemäß wurde erkannt, des die Zeitdauer des Druckeinbruches TI die eingespritzte Kraftstoffmenge unmittelbar charakterisiert.

Ausgehend von dem Vergleich zwischen dem Sollwert TS und dem Istwert TI für Zeitdauer des Druckeinbruches ergibt sich ein Wert DT. Ausgehend von diesem Wert DT, der die Abweichung zwischen dem erwarteten Wert und dem tatsächlichen Wert für den Druckeinbruch charakterisiert, wird von der ersten Korrekturwertvorgabe ein erster Korrekturwert ETK1 bestimmt. Dieser wird im Verknüpfungspunkt 105 vorzugsweise additiv der Ansteuerdauer ET überlagert. Mit der Sollwertvorgabe 120, der Istwertvorgabe 130 und der ersten Korrekturwertvorgabe 140 wird ein geschlossener Regelkreis für eingespritzte Kraftstoffmenge gebildet.

Bei einer besonders vorteilhaften Ausgestaltung ist vorgesehen, dass ausgehend von dem Steuerraumdrucksignal P die durch die Einspritzung ausgelöste Druckwelle ermittelt wird. Bei einer einfachen Ausführungsform ist hierzu die Berechnung der Druckwelle 150 als Kennfeld ausgebildet, dem als Eingangsgröße wenigstens der Steuerraumdruck P zugeführt wird. Zur Verbesserung der Auswertung können zusätzlich weitere Größen ausgewertet werden. Alternativ zu dem Kennfeld kann auch eine Berechnung gemäß einer vorgegebenen Formel vorgesehen sein. Bei einer einfachen Realisierung wird der Steuerraumdruck mit einem konstanten Faktor oder mit einem von Betriebsbedingungen abhängigen Faktor multipliziert.

Diese Druckwelle verursacht bei Mehrfacheinspritzungen Abweichungen von der gewünschten Kraftstoffmenge. Dabei wurde erfindungsgemäß erkannt, dass ein enger Zusammenhang besteht zwischen der Druckwelle im Steuerraum, der durch das Signal P charakterisiert wird, und dem Druck vor der Düse des Einspritzventils. Ausgehend von der Druckwelle, die in der Druckwellenberechnung 150 ausgehend von dem Drucksignal P bestimmt wird, berechnet die Mengenwellenberechnung 155 eine entsprechende Mengenwelle. Dabei wird der Zusammenhang zwischen dem momentanen Druck der abgegebenen Menge bei einer konstanten Ansteuerdauer berücksichtigt. Die Mengenwellenberechnung 155 bestimmt als Funktion des Abstandes AB zweier benachbarter Einspritzungen einen zweiten Korrekturfaktor ETK2, der diesen Einfluss berücksichtigt. Dieser Korrekturwert wird ebenfalls der Ansteuerdauer ET additiv überlagert.

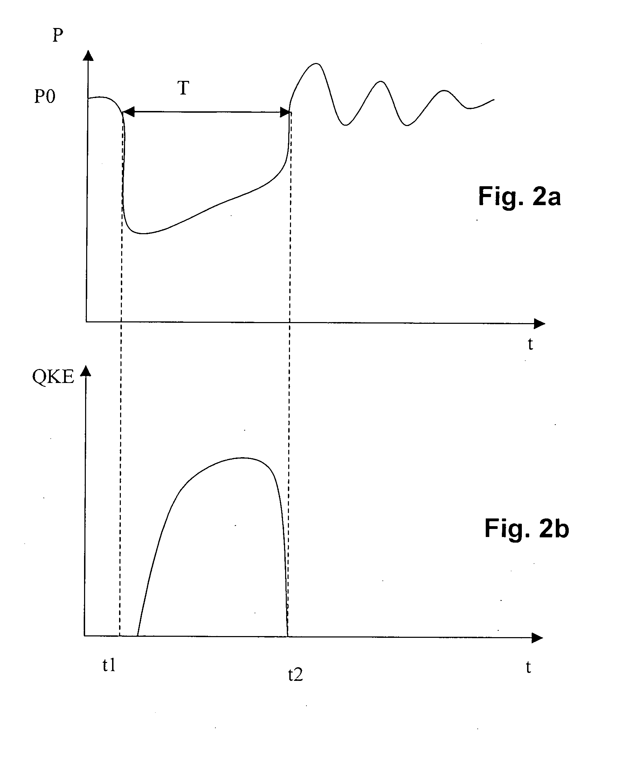

In Figur 2 sind verschiedene Signale über der Zeit t aufgetragen. In Figur 2a ist der Druck P im Steuerraum grob schematisch für eine Einspritzung aufgetragen und in Figur 2b die eingespritzte Kraftstoffmenge QKE ebenfalls über der Zeit t aufgetragen. Bis zu dem Zeitpunkt t1 nimmt der Druck einen nahezu konstanten Wert P0 an. Zum Zeitpunkt t1 fällt der Druck im Steuerraum ab und steigt allmählich wieder an. Zum Zeitpunkt t2 erreicht der Druck wieder seinen Ursprungswert P0. Anschließend oszilliert der Druck für eine gewisse Zeit um den Wert P0.

Bei einer vorteilhaften Ausgestaltung kann vorgesehen sein, dass die Druckwellenberechnung 150 derart ausgebildet ist, dass an Ihrem Ausgang ein Signal anliegt, das dem Raildruck entspricht. In diesem Fall kann dieses Signal, insbesondere der Wert P0 als Raildrucksignal verwendet werden.

Der Druckabfall zum Zeitpunkt t1 wird durch Öffnen des Aktors, über den Druck abgebaut wird, verursacht. Alternativ kann auch vorgesehen sein, dass der Druckabfall durch Schließen eines Ventils verursacht wird, das den Zulauf und damit den Druckaufbau verhindert. Entsprechend wird der Druckanstieg zum Zeitpunkt t2 dadurch verursacht, dass das Ventil, das den Druckabbau ermöglicht, geschlossen wird bzw. dass ein Ventil, das den Druckaufbau verhindert, geöffnet wird.

Der Verlauf des Druckes ist korreliert mit einem entsprechend Verlauf der eingespritzten Kraftstoffmenge. Dieser ist in Figur 2b dargestellt ist,. Die eingespritzte Kraftstoffmenge steigt ab dem Zeitpunkt t1 an und fällt bis zum Zeitpunkt t2 auf 0 ab. Der Abstand zwischen den Zeitpunkten t1 und t2 wird als Zeitdauer des Druckeinbruchs T bezeichnet. Die tatsächliche Zeitdauer TI wird von der Istwertvorgabe 130 ausgehend von dem gemessenen Drucksignal ermittelt. Des Weiteren wird von der Sollwertvorgabe 120 eine Zeitdauer TS bestimmt, die erforderlich ist, um die gewünschte einzuspritzende Kraftstoffmenge QK zuzumessen. Diese beiden Zeitdauern werden verglichen. Bei einer Abweichung wird von der ersten Korrekturwertvorgabe 145 ein Korrekturwert ETK1 ermittelt, mit dem die Ansteuerdauer des Stellgliedes bzw. der Endstufe 100 korrigiert wird. Vorzugsweise ist die erste Korrekturwertvorgabe 145 als Regler ausgebildet. D. h. es ergibt sich ein Regelkreis durch Messen des Drucks in dem Steuerraum des Stellgliedes.

Entsprechend sind die Schwingungen im Druck nach dem Zeitpunkt T2 mit der Druckwelle korreliert.

## Patentansprüche

1. Verfahren zur Steuerung einer Brennkraftmaschine, wobei ausgehend von einer Kraftstoffmenge eine Ansteuerdauer für ein mengenbestimmtes Stellglied vorgebbar ist, **dadurch gekennzeichnet, dass** die Ansteuerdauer abhängig von einer Größe, die den Druck in einem Steuerraum charakterisiert, korrigiert wird.

2. Verfahren nach Anspruch 1, **dadurch gekennzeichnet, dass** ausgehend von dem Verlauf der Größe, die den Druck in einem Steuerraum charakterisiert, eine Zeitgröße, die die eingespritzte Kraftstoffmenge charakterisiert, vorgegeben wird.

3. Verfahren nach einem der vorhergehenden Ansprüche, **dadurch gekennzeichnet, dass** ausgehend von dem Vergleich der Zeitgröße mit einem Sollwert die Ansteuerdauer beeinflusst wird.

4. Verfahren nach einem der vorhergehenden Ansprüche, **dadurch gekennzeichnet, dass** ausgehend von dem Vergleich der Zeitgröße mit einem Sollwert der Korrekturwert für die Ansteuerdauer vorgegeben wird.

5. Verfahren nach einem der vorhergehenden Ansprüche, **dadurch gekennzeichnet, dass** während eines Verbrennungszyklusses wenigstens eine erste und eine zweite Teileinspritzung erfolgt, wobei die zweite Teileinspritzung ausgehend von dem Verlauf der Größe während einer ersten Teileinspritzung korrigiert wird.

6. Vorrichtung zur Steuerung einer Brennkraftmaschine, mit Mitteln, die ausgehend von einer Kraftstoffmenge eine Ansteuerdauer für ein mengenbestimmtes Stellglied vorgeben, **dadurch gekennzeichnet, dass** Mittel vorgesehen sind, die die Ansteuerdauer abhängig von einer Größe, die den Druck in einem Steuerraum charakterisiert, korrigieren.

7. Vorrichtung nach Anspruch 6, **dadurch gekennzeichnet, dass** das Stellglied als Injektor ausgebildet ist.
